# EUROPÄISCHE PATENTSCHRIFT

(11) **EP 2 955 239 B1**
(45) Veröffentlichungstag und Bekanntmachung des Hinweises auf die Patenterteilung: **11.03.2020**
(21) Anmeldenummer: 15171386.4
(22) Anmeldetag: 10.06.2015
(51) Int. Cl.: C21D 9/60, C21D 1/42, C21D 1/673, H05B 6/10, F27D 99/00, H05B 6/40, H05B 6/44

(54) **VERFAHREN UND ERWÄRMUNGSANLAGE FÜR DAS SERIENMÄSSIGE ERWÄRMEN VON BLECHPLATINEN MIT AUSBILDUNG UNTERSCHIEDLICHER TEMPERATURZONEN**
METHOD AND HEATING PLANT FOR THE HEATING OF SHEET METAL CIRCUIT BOARDS WITH THE FORMATION OF DIFFERENT TEMPERATURE ZONES IN SERIES
PROCEDE ET INSTALLATION DE CHAUFFAGE POUR LE CHAUFFAGE EN SERIE DE PLATINES EN TOLE PAR FORMATION DE DIFFERENTES ZONES DE TEMPERATURE

(30) Priorität: 12.06.2014 DE 102014211241
(43) Veröffentlichungstag der Anmeldung: 16.12.2015
(73) Patentinhaber: Volkswagen Aktiengesellschaft, 38440 Wolfsburg (DE); SMS Elotherm GmbH, 42897 Remscheid (DE)
(72) Erfinder: Kotzian, Mathias, 38446 Wolfsburg (DE); Malek, Roland, 38440 Wolfsburg (DE); Jürgens, Robert, 42855 Remscheid (DE)
(74) Vertreter: Liebl, Thomas

(56) Entgegenhaltungen:
- EP-A1- 2 679 692
- DE-A1- 10 312 623
- DE-A1-102008 062 270
- DE-A1-102009 016 027
- DE-A1-102009 019 496
- DE-A1-102009 042 026
- DE-A1-102012 001 742
- KR-A- 20130 128 498

## Beschreibung

Die Erfindung betrifft ein Verfahren für das serienmäßige Erwärmen von Blechplatinen und insbesondere von Formplatinen, wobei die Blechplatinen nach dem Erwärmen eine unterschiedliche Temperaturzonen umfassende Temperaturverteilung für ein anschließendes Warmumformen und insbesondere Presshärten aufweisen sollen.

Die Erfindung betrifft ferner eine Erwärmungsanlage bzw. Wärmebehandlungsanlage für das serienmäßige Erwärmen von Blechplatinen, die ein entsprechendes Erwärmen von Blechplatinen ermöglicht.

Zum Warmumformen und insbesondere zum Presshärten werden die verwendeten Blechplatinen vorausgehend erwärmt. Aus dem Stand der Technik sind unterschiedliche Vorgehensweisen bekannt, mit denen beim Erwärmen durch Ausbildung unterschiedlicher Temperaturzonen eine bestimmte Temperaturverteilung innerhalb einer Blechplatine erzeugt werden kann, um damit bspw. ein partiell pressgehärtetes Blechformteil herstellen zu können. In der DE 200 14 361 U1 wird vorgeschlagen, einzelne Bereiche der Blechplatine gegen Temperatureinwirkung in einem Ofen zu isolieren, so dass diese isolierten Bereiche keine signifikante Erwärmung erfahren. In der DE 10 2009 015 013 B4 wird die Verwendung von Wärmeenergie aufnehmenden Absorptionsmassen während des Erhitzens der Platine vorgeschlagen. In der DE 102 56 621 B3 ist ein Durchlaufofen mit mehreren mittels Trennwänden voneinander getrennten Ofenzonen mit unterschiedlichen Temperaturniveaus beschrieben. Die DE 10 2012 001 742 A1 beschreibt eine Anordung von Erwärmungsanlagen die über eine Weiche in eine Hauptgasse und Nebengasse unterteilt sind. Die DE 10 2009 042 026 A1 zeigt eine Erwärmungseinrichtung zum Erwärmen eines Platinenstapels, wobei die Platinen nach dem Erwärmen vereinzelt aus dem Ofen geführt werden können. Weiterhin zeigt die DE 10 2008 062 270 A1 eine Einrichtung zum partiellen Härten von Werkstücken, wie z. B. Platinen partiell auf eine Temperatur aufgeheizt werden.

Der Erfindung liegt die Aufgabe zugrunde, ein Verfahren betreffender Art anzugeben, das wenigstens einen mit dem Stand der Technik einhergehenden Nachteil nicht oder zumindest nur in einem verminderten Umfang aufweist.

Diese Aufgabe wird gelöst von einem erfindungsgemäßen Verfahren entsprechend den Merkmalen des Patentanspruchs 1. Mit einem nebengeordneten Patentanspruch erstreckt sich die Erfindung auch auf eine erfindungsgemäße Erwärmungsanlage bzw. Wärmebehandlungsanlage. Bevorzugte Weiterbildungen und Ausgestaltungen ergeben sich analog für beide Erfindungsgegenstände sowohl aus den abhängigen Patentansprüchen als auch aus den nachfolgenden Erläuterungen.

Das erfindungsgemäße Verfahren ist dadurch gekennzeichnet, dass die Blechplatinen, insbesondere vereinzelt, zur Erwärmung relativ zu wenigstens einem ersten Induktor, der als Längsfeldinduktor betrieben wird, bewegt werden und dann relativ zu wenigstens einem zweiten Induktor, der als Querfeldinduktor betrieben wird, bewegt werden, wobei aufgrund der Anordnung wenigstens dieser beiden Induktoren zueinander und/oder durch eine aufeinander abgestimmte Betriebsweise dieser Induktoren die Erzeugung einer bestimmten bzw. definierten, unterschiedliche Temperaturzonen umfassenden Temperaturverteilung (innerhalb der Blechplatinen) bewerkstelligt bzw. herbeigeführt wird, derart, dass die Blechplatinen am ersten Induktor homogen auf eine Temperatur von bis zu 770 °C erwärmt werden und dann am zweiten Induktor eine bereichsweise Erwärmung auf eine Temperatur über 770 °C erfolgt.

Somit wird wenigstens eine Temperaturzone auf eine Temperatur oberhalb der werkstoffspezifischen Curie-Temperatur (ca. 720 °C bis 770 °C für Stahlblech) erwärmt.

Die Induktoren sind entsprechend ihrer Betriebsart ausgebildet. Bei der Erwärmung mittels Längsfeldinduktion (Längsfelderwärmung) wird die zu erwärmende Blechplatine von der Induktorspule umschlossen, so dass der magnetische Hauptfluss in der Blechebene liegt. Bei der Erwärmung mittels Querfeldinduktion (Querfelderwärmung) befinden sich Induktorspulen an den Oberflächen der zu erwärmenden Blechplatine, so dass der magnetische Hauptfluss im Wesentlichen senkrecht durch die Blechplatine verläuft. Die Prinzipien der Längs- und Querfeldinduktion, sowie entsprechende Längs- und Querfeldinduktoren sind aus dem Stand der Technik bekannt, wozu bspw. auf die DE 103 12 623 A1 hingewiesen wird. Das homogene Erwärmen von Blechplatinen mittels Querfeldinduktor oder Längsfeldinduktor ist auch in der DE 10 2009 016 027 A1 beschrieben.

Bevorzugt werden die zu erwärmenden Blechplatinen relativ zu den feststehenden Induktoren bewegt, derart, dass diese Blechplatinen, insbesondere einzeln bzw. vereinzelt, am ersten Induktor und dann am zweiten Induktor vorbeigeführt werden. Während der induktiven Erwärmung mittels Induktor kann die betreffende Blechplatine bewegt oder kurzzeitig angehalten werden. Die Bewegungsgeschwindigkeit bzw. Durchlaufgeschwindigkeit kann 40 mm/sec bis 250 mm/sec betragen und richtet sich insbesondere nach der Leistung der Induktoren und nach der Blechdicke. Die Durchlaufgeschwindigkeit (Vorschub) und/oder die Leistungen der Induktoren (bzw. die Induktorleistungen) können an die Blechdicke angepasst werden, was insbesondere bei der Verwendung von Tailored Blanks (sowohl Tailored Welded Blanks als auch Tailored Rolled Blanks) vorteilig ist.

Die erfindungsgemäße Verwendung von Induktoren ermöglicht eine schnelle und präzise Erwärmung (ohne Ofen) mit hohem Wirkungsgrad bei kurzer Zykluszeit. Im Vergleich zu den im Stand der Technik weit verbreiteten elektrisch und/oder mit Gas betriebenen Rollenherdöfen ergeben sich erhebliche Zeit-, Platz- und/oder Energieersparnisse. Die erfindungsgemäße Verwendung mehrerer, insbesondere unterschiedlich betriebener, Induktoren ermöglicht die gezielte Erzeugung bzw. Ausbildung einer vorgegebenen Temperaturverteilung in einer Blechplatine. Ferner ermöglicht die Erfindung die Erzeugung lagegenauer Temperaturzonen mit kleinen Übergangszonen. Zudem können die Temperaturzonen klein sein. Die magnetische Feldführung kann individuell an eine Platinenform bzw. -kontur angepasst werden. Jede Platinenkontur kann temperaturoptimiert erwärmt werden.

Der zweite Induktor kann zur Erwärmung einer Blechplatine nur zeitweise bzw. phasenweise bestromt werden, um dadurch lediglich einen bestimmten Bereich bzw. eine bestimmte Zone einer Blechplatine zu erwärmen (inhomogene Erwärmung). Außerdem kann vorgesehen sein, dass der zweite Induktor vor oder beim Erwärmen einer Blechplatine relativ zu dieser Blechplatine bewegt wird (bspw. durch Verschieben), insbesondere quer zu einer Durchlaufrichtung der Blechplatine, um dadurch gezielt nur einen bestimmten Bereich bzw. eine bestimmte Zone der Blechplatine zu erwärmen. Beide Maßnahmen zur Zonenerwärmung können auch miteinander kombiniert werden.

Es ist vorgesehen, dass die Blechplatinen am ersten Induktor homogen erwärmt werden. Es ist vorgesehen, dass der zweite Induktor zur Erwärmung unterschiedlicher Bereiche bzw. Zonen verwendet wird.

Die Erfindung hat viele Vorteile. Neben der bereits beschriebenen effektiven Möglichkeit zum Erwärmen von Blechplatinen mit unterschiedlichen Temperaturzonen können Überhitzungen in den Platinenrandzonen (sowohl an Außen- als auch Innenrändern) verhindert werden, wie diese bei Querfeldinduktion bzw. Querfelderwärmung häufig auftreten. Ferner können bestehende Erwärmungsanlagen bzw. -vorrichtungen für einen erfindungsgemäßen Betrieb nachgerüstet werden. Dies ist keine abschließende Aufzählung von Vorteilen.

Das erfindungsgemäße Verfahren sieht vor, dass die Blechplatinen, insbesondere Stahlblechplatinen, mit Hilfe eines als Längsfeldinduktor ausgebildeten oder betriebenen ersten Induktors im Wesentlichen homogen auf eine Temperatur von bis 720 °C und insbesondere auf eine Temperatur von bis zu 770 °C erwärmt bzw. vorgewärmt werden (dies entspricht annähernd der Curie-Temperatur von Stahlblech) und dass dann mit Hilfe des zweiten Induktors (Querfeldinduktor) eine bereichsweise bzw. zonenweise Erwärmung (inhomogene Hocherwärmung) der vorgewärmten Blechplatine auf eine Temperatur über 720 °C, vorzugsweise bis in einen Temperaturbereich von 920 °C bis 950 °C (Austenitisierungstemperatur von Stahlblech, zuzüglich einer Abkühlungszugabe für den Transport zum Formwerkzeug) und insbesondere auf eine Temperatur bis zu 1100 °C erfolgt, also auf eine Temperatur, die deutlich oberhalb der Curie-Temperatur liegt. Die homogene Erwärmung kann auch als Grunderwärmung bezeichnet werden. Zur homogenen Erwärmung kann der erste Induktor auch als Querfeldinduktor betrieben werden bzw. als Querfeldinduktor ausgebildet sein, insbesondere dann, wenn eine Grunderwärmung oberhalb der Curie-Temperatur vorgesehen ist. Das zonenweise bzw. inhomogene Hocherwärmen kann insbesondere mit den zuvor erläuterten Maßnahmen zur Zonenerwärmung erfolgen.

Es ist also vorgesehen, dass Stahlblechplatinen am ersten Induktor homogen auf eine Temperatur von bis zu 770 °C erwärmt werden und dann am zweiten Induktor eine bereichsweise Erwärmung auf eine Temperatur über 770 °C erfolgt.

Die Blechplatinen können zwischen dem Erwärmen am ersten Induktor und zweiten Induktor in einem Ofen wärmebehandelt werden, um dabei bspw. eine Diffusionsschutzschicht auf beschichteten Blechplatinen (bspw. AISi-Beschichtung) auszubilden. Bei dem Ofen handelt es sich insbesondere um einen elektrisch und/oder mit Gas betriebenen Ofen. Bevorzugt weisen die Blechplatinen beim Eintritt in den Ofen eine homogene Grunderwärmung auf, die mit Hilfe des ersten Induktors erzeugt wurde. Im Ofen erfolgt bevorzugt weder eine Erwärmung noch eine Abkühlung, sondern ein so genanntes Temperaturhalten. Die Ofentemperatur kann mehrere Hundert Grad Celsius betragen. Die Blechplatinen können auch nach dem Erwärmen am zweiten Induktor einem solchen Ofen zugeführt werden.

Eine erfindungsgemäße Erwärmungsanlage (bzw. Wärmebehandlungsanlage) für das serienmäßige Erwärmen von Blechplatinen, wobei die Blechplatinen nach dem Erwärmen eine unterschiedliche Temperaturzonen bzw. -bereiche umfassende Temperaturverteilung für ein anschließendes Warmumformen und insbesondere Presshärten aufweisen, umfasst:
- wenigstens einen ersten Induktor, wobei es sich um einen Längsfeldinduktor handelt; und
- wenigstens einen zweiten Induktor, wobei es sich insbesondere um einen Querfeldinduktor handelt.

Selbsterklärend ist die erfindungsgemäße Erwärmungsanlage zur Durchführung bzw. Ausführung eines erfindungsgemäßen Verfahrens geeignet.

Die erfindungsgemäße Erwärmungsanlage ist als Durchlaufanlage ausgebildet, wobei die Induktoren in Durchlaufrichtung der zu erwärmenden Blechplatinen stationär hintereinanderliegend angeordnet sind. Gleichwohl weist die erfindungsgemäße Erwärmungsanlage (in Durchlaufrichtung) eine kurze Baulänge auf. Besonders bevorzugt sind der erste Induktor und der zweite Induktor baulich zusammengefasst und hierzu bspw. in einem Gestell, Gehäuse oder dergleichen angeordnet. Der Platinendurchlauf durch die erfindungsgemäße Erwärmungsanlage kann mit Hilfe von Rollen und insbesondere paarweise angeordneten Unter- und Oberrollen (bzw. Unter- und Oberwalzen) erfolgen. Mit Hilfe paarweise angeordneter Rollenpaare wird eine präzise und störungsunanfällige Durchleitung der zu erwärmenden Blechplatinen ermöglicht und dabei auch ein thermisches Verformen selbiger verhindert.

Der zweite Induktor kann umrüstbar (insbesondere austauschbar bzw. auswechselbar) ausgebildet sein, wobei über die gegebene Umrüstbarkeit eine individuelle Anpassung an zu erwärmende Blechplatinen und/oder an zu erzeugende Temperaturverteilungen ermöglicht wird. Bevorzugt gehört zur erfindungsgemäßen Erwärmungsanlage eine Vielzahl unterschiedlich ausgebildeter zweiter Induktoren, die eine schnelle Umrüstung ermöglichen.

Außerdem ist bevorzugt vorgesehen, dass der zweite Induktor (oder zumindest dessen Spulenanordnung), insbesondere quer zu einer Durchlaufrichtung der Blechplatinen, bewegbar bzw. verschiebbar ausgebildet ist, um dadurch gezielt nur einen bestimmten Bereich bzw. eine bestimmte Zone der Blechplatine zu erwärmen, wie bereits oben beschrieben. Die Bewegbarkeit wird insbesondere durch eine entsprechende Lagerung ermöglicht, wobei die Bewegungen bzw. Verfahrbewegungen mit Hilfe eines geeigneten steuerbaren Antriebs bewerkstelligt werden können.

Bevorzugt ist der erste Induktor umschaltbar ausgebildet, so dass dieser wahlweise als Längsfeld- oder Querfeldinduktor betreibbar ist bzw. betrieben werden kann. Besonders bevorzugt ist vorgesehen, dass der Betrieb als Längsfeldinduktor einem, insbesondere voreingestellten, Standard-Betriebsmodus entspricht. Im Übrigen kann auch der zweite Induktor bezüglich seiner Betriebsart umschaltbar ausgebildet sein.

Die erfindungsgemäße Erwärmungsanlage kann wenigstens einen (in Durchlaufrichtung der Blechplatinen) zwischen den Induktoren, d. h. zwischen dem ersten Induktor und dem zweiten Induktor, oder nach dem zweiten Induktor angeordneten Ofen umfassen. Insbesondere handelt es sich um einen elektrisch und/oder mit Gas betriebenen Ofen, der dazu vorgesehen ist, die Ausbildung einer Diffusionsschutzschicht auf den zu erwärmenden Blechplatinen zu ermöglichen.

Die erfindungsgemäße Erwärmungsanlage umfasst wenigstens einen und bevorzugt exakt einen als Längsfeldinduktor ausgebildeten bzw. betreibbaren ersten Induktor (der insbesondere zur homogenen Erwärmung der Blechplatinen vorgesehen ist) und zwei zweite Induktoren (die insbesondere zur inhomogenen bzw. bereichsweisen Erwärmung der Blechplatinen vorgesehen sind), wobei diese zweiten Induktoren als Querfeldinduktoren ausgebildet bzw. betreibbar sind (so genanntes Querfeldinduktorenpaar). Dieses Querfeldinduktorenpaar umfasst zwei in Durchlaufrichtung hintereinanderliegende und bevorzugt direkt aufeinanderfolgende Querfeldinduktoren, die die zu erwärmenden und hierzu insbesondere am feststehenden Querfeldinduktorenpaar vorbeigeführten Blechplatinen von verschiedenen Seiten und bevorzugt von entgegengesetzten Außenseiten her übergreifen. Dadurch kann jeder dieser Querfeldinduktoren gezielt nur eine bestimmte Platinenrandzone bzw. Platinenaußenkante beeinflussen, wodurch z. B. Überhitzungen in diesen Platinenrandzonen verhindert werden können. Bevorzugt sind die Querfeldinduktoren des Querfeldinduktorenpaars separat bewegbar bzw. verschiebbar, so dass durch unabhängiges Verschieben eine Überhitzung und/oder Unterkühlung in den Platinenrandzonen bzw. an den Platinenaußenkanten je nach Zielsetzung verhindert und/oder herbeigeführt werden kann.

Die Erfindung wird nachfolgend beispielhaft und in nicht einschränkender Weise mit Bezug auf die schematischen und nicht maßstabsgerechten Figuren näher erläutert, wobei auch eine bevorzugte Ausführungsform einer erfindungsgemäßen Erwärmungsanlage gezeigt und erläutert wird. Die in den Figuren gezeigten und/oder nachfolgend erläuterten Merkmale können, unabhängig von konkreten Merkmalskombinationen, allgemeine Merkmale der Erfindung sein.
- Fig. 1: zeigt in einer Draufsicht eine Anordnung für das serienmäßige Herstellen von warmumgeformten und insbesondere pressgehärteten Blechformteilen, die eine erfindungsgemäße Erwärmungsanlage umfasst.
- Fig. 2: zeigt in Draufsichten mehrere mit der Erwärmungsanlage aus Fig. 1 erwärmte Blechplatinen bzw. Formplatinen.
- Fig. 3: zeigt in einer Schnittansicht die zum ersten Induktor der Erwärmungsanlage aus Fig. 1 gehörende Spulenanordnung (gemäß dem in Fig. 1 angegebenen Schnittverlauf A-A).

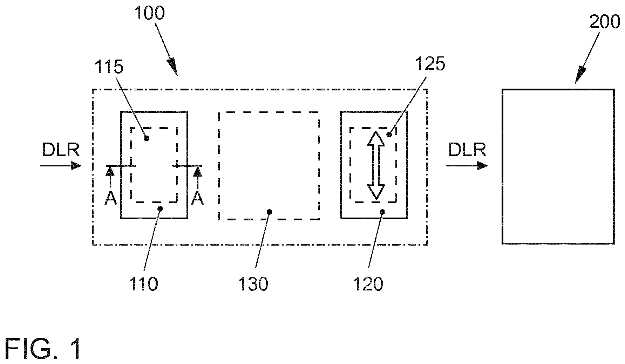

Fig. 1 zeigt in einer Draufsicht eine erfindungsgemäße Erwärmungsanlage 100 für das serienmäßige Erwärmen von Blechplatinen, wobei die Blechplatinen nach dem Erwärmen eine unterschiedliche Temperaturzonen umfassende Temperaturverteilung aufweisen und nachfolgend in einem pressengebundenen Werkzeug 200 warmumgeformt und insbesondere pressgehärtet (oder entsprechend der Temperaturverteilung partiell pressgehärtet) werden. Die Pfeile DLR geben die Durchlaufrichtung der Blechplatinen an.

Die als Durchlaufanlage ausgebildete Erwärmungsanlage 100 umfasst einen ersten Induktor 110 mit einer Spulenanordnung 115, der als Längsfeldinduktor betrieben werden kann, und einen zweiten Induktor 120, der als Querfeldinduktor ausgebildet ist. Der zweite Induktor 120 (oder zumindest dessen Spulenanordnung 125) ist quer zur Durchlaufrichtung DLR bewegbar bzw. horizontal verschiebbar ausgebildet, wie mit dem Doppelpfeil veranschaulicht. Gemäß ihrer Anordnung in Bezug auf die Durchlaufrichtung DLR können der erste Induktor 110 auch als Einlaufinduktor und der zweite Induktor 120 als Auslaufinduktor bezeichnet werden. Anstelle eines einzelnen zweiten Induktors 120 kann auch ein Querfeldinduktorenpaar (wie obenstehend erläutert) vorgesehen sein.

Zwischen dem ersten Induktor 110 und dem zweiten Induktor 120 ist optional ein Ofen 130 angeordnet, der vorliegend als Durchlaufofen ausgebildet ist. Der Ofen 130 kann in Durchlaufrichtung DLR auch nach dem zweiten Induktor 120 angeordnet sein. Der Ofen 130 dient insbesondere zur Ausbildung einer Diffusionsschutzschicht auf den Blechplatinen. Die Erwärmungsanlage 100 zeichnet sich (insbesondere ohne Ofen 130) durch eine kurze Baulänge aus.

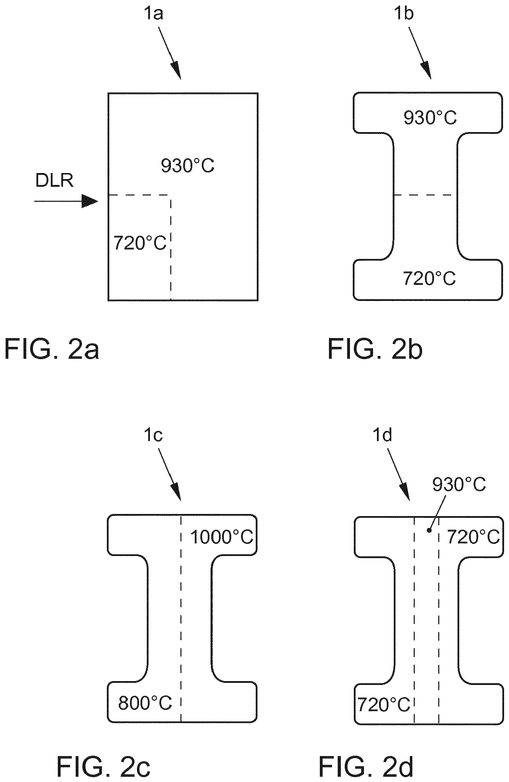

Fig. 2 zeigt in einer Draufsicht mehrere aus Stahlblech gebildete Blechplatinen 1, die mit der Erwärmungsanlage 100 erwärmt wurden und jeweils eine unterschiedliche Temperaturzonen umfassende Temperaturverteilung aufweisen. Die Unterteilung der Temperaturzonen ist mit Hilfe strichlierter Linien veranschaulicht. Bei den Blechplatinen 1b, 1c und 1d gemäß Fig. 2b, 2c und 2d handelt es sich beispielhaft um Formplatinen zur Herstellung von B-Säulen für eine PKW-Kraftfahrzeugkarosserie.

Die erwärmte Blechplatine 1a (gemäß Fig. 2a) weist zwei Temperaturzonen bzw. -bereiche auf. Mit Hilfe des ersten Induktors 110 erfolgt eine homogene Grunderwärmung der Blechplatine 1a auf 720 °C, wobei der erste Induktor 110 als Längsfeldinduktor betrieben wird. Mit Hilfe des zweiten Induktors 120 erfolgt eine Hocherwärmung des gekennzeichneten Bereichs auf 930 °C, wobei der zweite Induktor 120 während der Erwärmung nach außen bewegt wird, so dass gemäß Darstellung ein Eckbereich von der Hocherwärmung ausgenommen ist.

In analoger Weise erfolgt die Erwärmung der Formplatine 1b (gemäß Fig. 2b), wobei der zweite Induktor 120 so positioniert wird, dass nur die linke Platinenhälfte (bzw. gemäß Darstellung die obere Platinenhälfte) der Formplatine 1b hocherwärmt wird. Soll die Temperatur in den Temperaturzonen nicht 720 °C und 930 °C, sondern bspw. 800 °C und 1000 °C betragen, so würde der erste Induktor 110 als Querfeldinduktor betrieben werden, um die höhere Grunderwärmung zu erzeugen.

Die Formplatine 1c (gemäß Fig. 2c) wird mit Hilfe des ersten Induktors 110 homogen auf 800 °C erwärmt, wozu der erste Induktor 110 als Querfeldinduktor betrieben wird. Mit Hilfe des zweiten Induktors 120 wird nur die vordere Platinenhälfte (bzw. gemäß Darstellung die rechte Platinenhälfte) der Formplatine 1c auf 1000 °C hocherwärmt, wozu der zweite Induktor 120 nur bis zur Hälfte des Platinendurchlaufs bestromt wird.

Die Formplatine 1d (gemäß Fig. 2d) wird mit Hilfe des ersten Induktors 110 homogen auf 720 °C erwärmt, wozu der erste Induktor 110 als Längsfeldinduktor betrieben wird. Mit Hilfe des zweiten Induktors 120 wird nur der mittlere bandartige Platinenbereich der Formplatine 1d auf 930 °C hocherwärmt, wozu der zweite Induktor 120 beim Durchlaufen des betreffenden Platinenbereichs nur zeitweise kurz bestromt wird.

Die im Zusammenhang mit der Fig. 2 beispielhaft erläuterten Verfahrensweisen sind zur Erzeugung anderer Temperaturverteilungen bzw. Temperaturprofile kombinierbar. Durch Veränderung der Durchlaufgeschwindigkeit (Vorschub) und/oder der Induktorleistungen kann die Erwärmungstemperatur beeinflusst und insbesondere angepasst bzw. eingestellt werden, wobei dies auch in einem Regelkreis erfolgen kann.

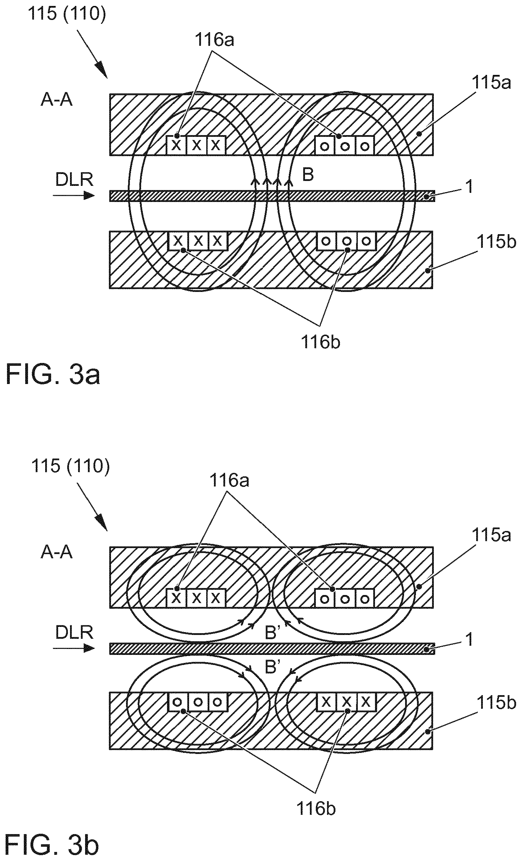

Fig. 3 zeigt die Spulenanordnung 115 des ersten Induktors 110, die einen oberen Induktorteil 115a, mit einem mehrere Einzelleiter umfassenden Leiterpaket 116a, und einen symmetrisch ausgebildeten unteren Induktorteil 115b, mit einem mehrere Einzelleiter umfassenden Leiterpaket 116b, umfasst.

In der in Fig. 3a dargestellten Beschaltung wird die Spulenanordnung 115 des ersten Induktors 110 als Querfeldinduktor betrieben, wobei die zwischen den Induktorteilen 115a und 115b befindliche Blechplatine 1 vom Magnetfeld bzw. dem magnetischen Hauptfluss senkrecht durchsetzt wird, wie anhand der dargestellten Magnetflusslinien B veranschaulicht.

In der in Fig. 3b dargestellten Beschaltung wird dieselbe Spulenanordnung 115 als Längsfeldinduktor betrieben, wobei die zu erwärmende Blechplatine 1 parallel zu ihren Oberflächen vom Magnetfeld durchsetzt wird und der magnetische Hauptfluss quasi in der Blechebene liegt, wie anhand der dargestellten Magnetflusslinien B' veranschaulicht. Das Magnetfeldbild unterscheidet sich nicht von einem klassischen Längsfeld, obgleich die Spulenanordnung nicht dem konventionellen umschließenden bzw. umgreifenden Aufbau entspricht, sondern zwei über und unter der zu erwärmenden Blechplatine 1 angeordnete Induktorteile bzw. einen oberen Induktor 115a und einen unteren Induktor 115b aufweist.

Der erste Induktor 110 oder dessen Spulenanordnung 115 kann, analog zum zweiten Induktor 120 bzw. dessen Spulenanordnung 125, bewegbar bzw. horizontal verschiebbar ausgebildet sein, insbesondere derart, dass der obere Induktorteil 115a und der untere Induktorteil 115b gemeinsam bzw. synchron bewegbar bzw. verschiebbar sind. Der zweite Induktor 120 kann analog zum ersten Induktor 110 ausgebildet sein.

### Bezugszeichenliste

- 1: Blechplatine
- 100: Erwärmungsanlage
- 110: erster Induktor (Einlaufinduktor)
- 115: Spulenanordnung
- 116: Leiterpaket
- 120: zweiter Induktor (Auslaufinduktor)
- 125: Spulenanordnung
- 130: Ofen
- 200: Formwerkzeug
- B: Magnetfeld
- DLR: Platinen-Durchlaufrichtung

## Patentansprüche

1. Verfahren für das serienmäßige Erwärmen von Stahlblechplatinen (1) und insbesondere von Formplatinen in einer Durchlaufanlage, wobei die Stahlblechplatinen (1) nach dem Erwärmen eine unterschiedliche Temperaturzonen umfassende Temperaturverteilung für ein anschließendes Warmumformen und insbesondere Presshärten aufweisen,
**dadurch gekennzeichnet, dass**
die Stahlblechplatinen (1) zur Erwärmung relativ zu wenigstens einem ersten Induktor (110), der als Längsfeldinduktor betrieben wird, bewegt werden und dann relativ zu wenigstens einem zweiten Induktor (120), der als Querfeldinduktor betrieben wird, bewegt werden, wobei aufgrund der Anordnung der beiden Induktoren (110, 120) zueinander und/oder durch eine aufeinander abgestimmte Betriebsweise der Induktoren (110, 120) die Erzeugung einer bestimmten, unterschiedliche Temperaturzonen umfassenden Temperaturverteilung herbeigeführt wird, derart, dass die Stahlblechplatinen (1) am ersten Induktor (110) homogen auf eine Temperatur von bis zu 770 °C erwärmt werden und dann am zweiten Induktor (120) eine bereichsweise Erwärmung auf eine Temperatur über 770 °C erfolgt.

2. Verfahren nach Anspruch 1,
**dadurch gekennzeichnet, dass**
der zweite Induktor (120) bei der Erwärmung einer Stahlblechplatine (1) nur zeitweise bestromt wird, um lediglich einen bestimmten Bereich der Stahlblechplatine (1) zu erwärmen.

3. Verfahren nach Anspruch 1 oder 2,
**dadurch gekennzeichnet, dass**
der zweite Induktor (120) vor oder beim Erwärmen einer Stahlblechplatine (1) bewegt wird, um gezielt nur einen bestimmten Bereich der Stahlblechplatine (1) zu erwärmen.

4. Verfahren nach einem der vorausgehenden Ansprüche,
**dadurch gekennzeichnet, dass**
die Stahlblechplatinen (1) zwischen dem Erwärmen am ersten Induktor (110) und zweiten Induktor (120) oder nach dem Erwärmen am zweiten Induktor (120) in einem Ofen (130) wärmebehandelt werden, insbesondere um hierbei eine Diffusionsschutzschicht auf den Stahlblechplatinen (1) auszubilden.

5. Erwärmungsanlage (100) für das serienmäßige Erwärmen von Stahlblechplatinen (1) und insbesondere von Formplatinen, wobei die Stahlblechplatinen (1) nach dem Erwärmen eine unterschiedliche Temperaturzonen umfassende Temperaturverteilung für ein anschließendes Warmumformen und insbesondere Presshärten aufweisen, mit:
- wenigstens einem ersten Induktor (110), bei dem es sich um einen Längsfeldinduktor handelt; und
- wenigstens einem zweiten Induktor (120), bei dem es sich um einen Querfeldinduktor handelt;
wobei diese Erwärmungsanlage (100) als Durchlaufanlage ausgebildet ist und die Induktoren (110, 120) in Durchlaufrichtung (DLR) der zu erwärmenden Stahlblechplatinen (1) hintereinanderliegend angeordnet sind, und
wobei der zweite Induktor (120) ein Querfeldinduktorenpaar mit zwei in Durchlaufrichtung (DLR) hintereinanderliegenden Querfeldinduktoren, die die zu erwärmenden Stahlblechplatinen (1) von entgegengesetzten Außenseiten her übergreifen, umfasst.

6. Erwärmungsanlage (100) nach Anspruch 5,
**dadurch gekennzeichnet, dass**
der zweite Induktor (120) umrüstbar und/oder, insbesondere quer zu einer Durchlaufrichtung (DLR), bewegbar ausgebildet ist.

7. Erwärmungsanlage (100) nach einem der Ansprüche 5 oder 6,
**umfassend**
einen zwischen dem ersten Induktor (110) und dem zweiten Induktor (120) oder nach dem zweiten Induktor (120) angeordneten Ofen (130).

## Claims

1. Method for the serial heating of sheet steel blanks (1), and in particular of shaped blanks in a continuous plant, wherein after heating the sheet steel blanks (1) have a temperature distribution comprising different temperature zones for subsequent hot forming, and in particular press hardening,
**characterized in that**
for heating the steel sheet blanks (1) are moved relative to at least one first inductor (110), which is operated as a longitudinal field inductor, and are then moved relative to at least one second inductor (120), which is operated as a transverse field inductor, wherein, due to the arrangement of the two inductors (110, 120) relative to one another, and/or due to a coordinated mode of operation of the inductors (110, 120), the generation of a specific temperature distribution comprising different temperature zones is brought about in such a manner that the sheet steel blanks (1) are heated homogeneously to a temperature of up to 770 °C at the first inductor (110), and then heating to a temperature above 770 °C takes place regionally at the second inductor (120).

2. Method according to claim 1,
**characterized in that**
the second inductor (120) is only temporarily energized upon heating a sheet steel blank (1), in order to heat only a certain region of the sheet steel blank (1).

3. Method according to claim 1 or 2,
**characterized in that**
the second inductor (120) is moved before or during the heating of a sheet steel blank (1), in order to specifically heat only a certain region of the sheet steel blank (1).

4. Method according to any one of the preceding claims,
**characterized in that**
the sheet steel blanks (1) are heat-treated in a furnace (130) between the heating at the first inductor (110) and the second inductor (120), or after the heating at the second inductor (120), in particular to hereby form a protective diffusion layer on the sheet steel blanks (1).

5. Heating plant (100) for the serial heating of sheet steel blanks (1), and in particular of shaped blanks, wherein after heating the sheet steel blanks (1) have a temperature distribution comprising different temperature zones for subsequent hot forming, and in particular press hardening, with:
- at least one first inductor (110) which is a longitudinal field inductor; and
- at least one second inductor (120) which is a transverse field inductor;
wherein this heating plant (100) is formed as a continuous plant, and the inductors (110, 120) are arranged one after the other in the direction of passage (DLR) of the sheet steel blanks (1) to be heated, and
wherein the second inductor (120) comprises a transverse field inductor pair with two transverse field inductors lying one after the other in the direction of passage (DLR), which transverse field inductors overlap the steel sheet blanks (1) to be heated from opposite outer sides.

6. Heating plant (100) according to claim 5,
**characterized in that**
the second inductor (120) is formed to be convertible and/or movable, in particular movable transverse to a direction of passage (DLR).

7. Heating plant (100) according to one of claims 5 or 6,
**comprising**
a furnace (130) arranged between the first inductor (110) and the second inductor (120), or after the second inductor (120).

## Revendications

1. Procédé de chauffage en série de plaques de tôle d'acier (1) et en particulier de plaques de moulage dans une installation à passage continu, les plaques de tôle d'acier (1) comprenant, après le chauffage, une distribution de température comprenant différentes zones de température pour un formage à chaud ultérieur et en particulier pour un trempage sous presse,
**caractérisé en ce que**
les plaques de tôle d'acier (1), pour le chauffage, sont déplacées par rapport à au moins un premier inducteur (110), lequel fonctionne comme inducteur à champ longitudinal, puis lesdites plaques de tôle d'acier sont déplacées par rapport à au moins un deuxième inducteur (120), lequel fonctionne comme inducteur à champ transversal, la génération d'une distribution de température déterminée comprenant différentes zones de température étant effectuée en raison de l'agencement des deux inducteurs (110, 120) l'un par rapport à l'autre et/ou au moyen d'un mode de fonctionnement adapté des inducteurs (110, 120), de telle sorte que les plaques de tôle d'acier (1) sont chauffées, au niveau du premier inducteur (110), de manière homogène à une température allant jusqu'à 770 °C, puis un chauffage par zones à une température supérieure à 770 °C a lieu au niveau du deuxième inducteur (120).

2. Procédé selon la revendication 1,
**caractérisé en ce que**
le deuxième inducteur (120), lors du chauffage d'une plaque de tôle d'acier (1), n'est alimenté en courant que temporairement afin de chauffer uniquement une zone déterminée de la plaque de tôle d'acier (1).

3. Procédé selon la revendication 1 ou 2,
**caractérisé en ce que**
le deuxième inducteur (120), avant ou lors du chauffage d'une plaque de tôle d'acier (1), est déplacé afin de chauffer de manière ciblée uniquement une zone déterminée de la plaque de tôle d'acier (1).

4. Procédé selon l'une quelconque des revendications précédentes,
**caractérisé en ce que**
les plaques de tôle d'acier (1), entre le chauffage au niveau du premier inducteur (110) et celui au niveau du deuxième inducteur (120) ou après le chauffage au niveau du deuxième inducteur (120), sont traitées thermiquement dans un four (130), en particulier pour former ainsi une couche de protection contre la diffusion sur les plaques de tôle d'acier (1).

5. Installation de chauffage (100) pour le chauffage en série de plaques de tôle d'acier (1) et en particulier de plaques de moulage, les plaques de tôle d'acier (1) comprenant, après le chauffage, une distribution de température comprenant différentes zones de température pour un formage à chaud ultérieur et en particulier pour un trempage sous presse, comprenant :
- au moins un premier inducteur (110), lequel est un inducteur à champ longitudinal ; et
- au moins un deuxième inducteur (120), lequel est un inducteur à champ transversal ;
ladite installation de chauffage (100) étant conçue sous la forme d'une installation à passage continu et les inducteurs (110, 120) étant disposés l'un derrière l'autre dans le sens de passage continu (DLR) des plaques de tôles d'acier (1) à chauffer et
le deuxième inducteur (120) comprenant une paire d'inducteurs à champ transversal comportant deux inducteurs à champ transversal situés l'un derrière l'autre dans le sens de passage continu (DLR), lesquels chevauchent les plaques de tôle d'acier (1) à chauffer à partir de côtés extérieurs opposés.

6. Installation de chauffage (100) selon la revendication 5,
**caractérisé en ce que**
le deuxième inducteur (120) est conçu pour être adaptable et/ou mobile, en particulier transversalement à un sens de passage continu (DLR).

7. Installation de chauffage (100) selon l'une quelconque des revendications 5 ou 6,
**comprenant**
un four (130) disposé entre le premier inducteur (110) et le deuxième inducteur (120) ou après le deuxième inducteur (120).
